# FASCICULE DE BREVET EUROPEEN

(11) **EP 4 264 781 B1**
(45) Date de publication et mention de la délivrance du brevet: **26.11.2025**
(21) Numéro de dépôt: 21836511.2
(22) Date de dépôt: 14.12.2021
(51) Int. Cl.: H02K 1/02, H01F 7/02, H02K 1/2796, H02K 15/03

(54) **ELEMENT A POLES MAGNETIQUES, COMPRENANT UN ENSEMBLE DE PLUSIEURS AIMANTS UNITAIRES, POUR ROTOR DE MACHINE ELECTRIQUE A FLUX AXIAL**
MAGNETPOL-ELEMENT MIT EINER ANORDNUNG AUS MEHREREN EINZELMAGNETEN FÜR DEN ROTOR EINER ELEKTRISCHEN AXIALFLUSSMASCHINE
ELEMENT WITH MAGNETIC POLES, COMPRISING AN ASSEMBLY OF SEVERAL INDIVIDUAL MAGNETS, FOR THE ROTOR OF AN AXIAL FLUX ELECTRIC MACHINE

(30) Priorité: 17.12.2020 FR 2013489
(43) Date de publication de la demande: 25.10.2023
(73) Titulaire: Ampere SAS, 92100 Boulogne-Billancourt (FR); Whylot, 46100 Cambes (FR)
(72) Inventeur: KOLEHMAINEN, Jere, 76410 Saint-Aubin-lès-Elbeuf (FR)
(74) Mandataire: Jacobacci Coralis Harle
(86) Numéro de dépôt international: PCT/EP2021/085596
(87) Numéro de publication internationale: WO 2022/128983

(56) Documents cités:
- CN-A- 111 049 287
- FR-A1- 2 996 378
- FR-A1- 3 064 422
- JP-A- H10 304 610
- US-A- 5 861 695

## Description

### DOMAINE TECHNIQUE DE L'INVENTION

La présente invention concerne de manière générale le domaine des machines électriques.

Elle concerne plus particulièrement un élément à pôles magnétiques pour un rotor de machine électrique à flux axial.

Elle concerne également un rotor comprenant un tel élément à pôles magnétiques, une machine électrique à flux axial comprenant un tel rotor, et un procédé d'assemblage d'un tel rotor.

L'invention trouve une application particulièrement avantageuse dans la réalisation de moteurs électriques pour véhicules automobiles électriques ou hydrides (voiture, camion, bus...). Elle s'applique plus généralement aussi à d'autres appareils motorisés, tels que par exemple les ascenseurs, les grues...

### ETAT DE LA TECHNIQUE

Une machine électrique à flux axial comprend généralement un stator et un rotor, un entrefer séparant ces deux types d'éléments. Le rotor porte une série de grands aimants permanents, tandis qu'une série de bobines est portée par le stator. Quand les bobines sont alimentées par un courant électrique, le rotor, qui est solidarisé à l'arbre de sortie du moteur, est soumis à un couple résultant du champ magnétique (le flux magnétique créé étant un flux axial).

Pour réduire les pertes énergétiques par courants de Foucault dans le rotor, et ainsi augmenter les performances de la machine électrique, les grands aimants permanents peuvent être remplacés par des « éléments à pôles magnétiques » comportant chacun une pluralité d'aimants unitaires de tailles réduites. En effet, un grand aimant permanent est sujet à des pertes par courants de Foucault plus importantes que son équivalent en petits aimants unitaires.

Les aimants unitaires sont agencés de façon serrée pour maximiser le volume de matériau magnétique par rapport au volume de l'élément à pôle magnétique correspondant et ainsi améliorer les performances de la machine électrique.

On connait par exemple du document FR3064422 une structure comprenant des aimants unitaires de petites tailles. Ces aimants unitaires présentent l'avantage de pouvoir former un réseau serré tout en présentant un fort champ magnétique. Dans ce document, ces aimants unitaires sont liés entre eux au moyen d'une résine. En particulier, cette résine s'étend tout autour de cet ensemble d'aimants unitaires, formant ainsi une « bride » solidarisant les aimants unitaires entre eux.

Remplir le volume de l'élément à pôle magnétique avec le maximum d'aimants unitaires en limitant les coûts de fabrication s'avère malgré tout complexe. En effet, les éléments à pôles magnétiques présentent généralement deux bords de formes rectilignes mais non parallèles. Agencer des aimants unitaires de formes identiques génère alors nécessairement des espaces vides, comblés par la résine, ce qui diminue l'efficacité magnétique de l'élément à pôle magnétique et donc du rotor.

Le document FR2996378 propose une solution similaire à celle du document FR3064422.

On connaît par ailleurs des documents JPH10304610 et US5861695 un moteur électrique à flux radial, utilisant des aimants unitaires noyés dans une résine chargée de poudre magnétique.

### PRESENTATION DE L'INVENTION

La présente invention propose un procédé tel que défini en revendication 1.

Ainsi, l'invention propose de profiter de l'ensemble du volume de l'élément à pôle magnétique pour y loger du matériau magnétique (les aimants unitaires et la poudre d'aimant).

De cette façon, il est possible d'utiliser des aimants unitaires de formes simples et qui sont donc peu coûteux, quand bien même ils ne permettent pas de remplir tout le volume de l'élément à pôle magnétique. Le reste de l'élément à pôles magnétiques est en effet alors rempli du matériau composite chargé en poudre d'aimant. Ce matériau a certes des propriétés magnétiques plus faibles que celles des aimants, mais des pertes très faibles.

Deux avantages inhérents sont en outre procurés par l'invention. Le premier avantage est que, grâce au remplissage complet de chaque élément à pôles magnétiques par du matériau magnétique, les ondulations de couple lorsque le rotor tourne sont réduites, ce qui génère une diminution des vibrations et du bruit. Le second avantage est que les pertes par courants de Foucault sont réduites, ce qui offre au moteur un meilleur rendement.

Plus précisément, les courants de Foucault sont très faibles sur les zones de matériau composite. En outre, la taille des zones de matériau composite peut être optimisée pour minimiser les pertes totales, les vibrations et le bruit. Une variation en douceur (continue) de la teneur en matériau magnétique depuis une zone non magnétique vers une zone entièrement magnétique est la meilleure solution pour réduire les pertes, les vibrations et le bruit. Une quantité maximale de matériau magnétique est la meilleure solution pour maximiser la puissance et/ou le couple du moteur sur une courte durée.
D'autres caractéristiques avantageuses et non limitatives du procédé conforme à l'invention, prises individuellement ou selon toutes les combinaisons techniquement possibles, sont définies en revendications 2 à 5.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une machine électrique à flux axial conforme à l'invention ;
- la figure 2 est une vue schématique en coupe du rotor de la machine électrique de la figure 1 ;
- la figure 3 illustre cinq premiers modes de réalisation d'un élément à pôles magnétiques utilisable dans le rotor de la figure 2 ;
- la figure 4 illustre cinq autres modes de réalisation d'un élément à pôles magnétiques utilisable dans le rotor de la figure 2 ;

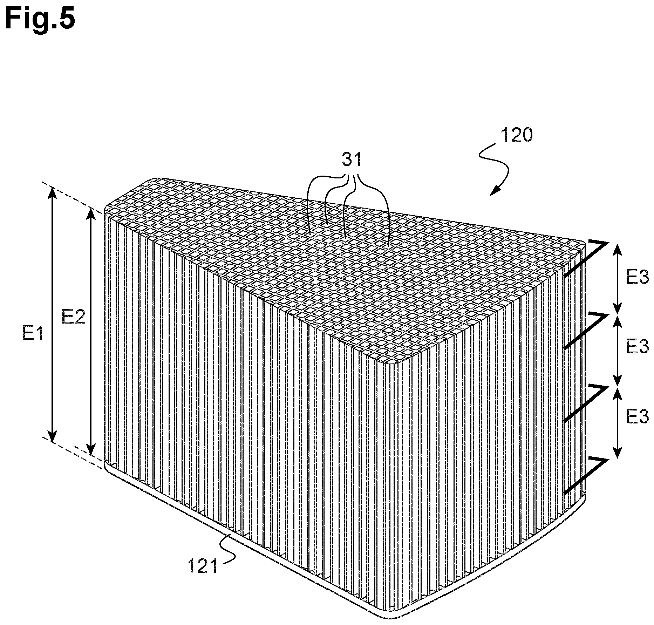

- la figure 5 illustre un bloc aimant permettant de fabriquer les éléments unitaires de trois éléments à pôles magnétiques utilisables dans le rotor de la figure 2.

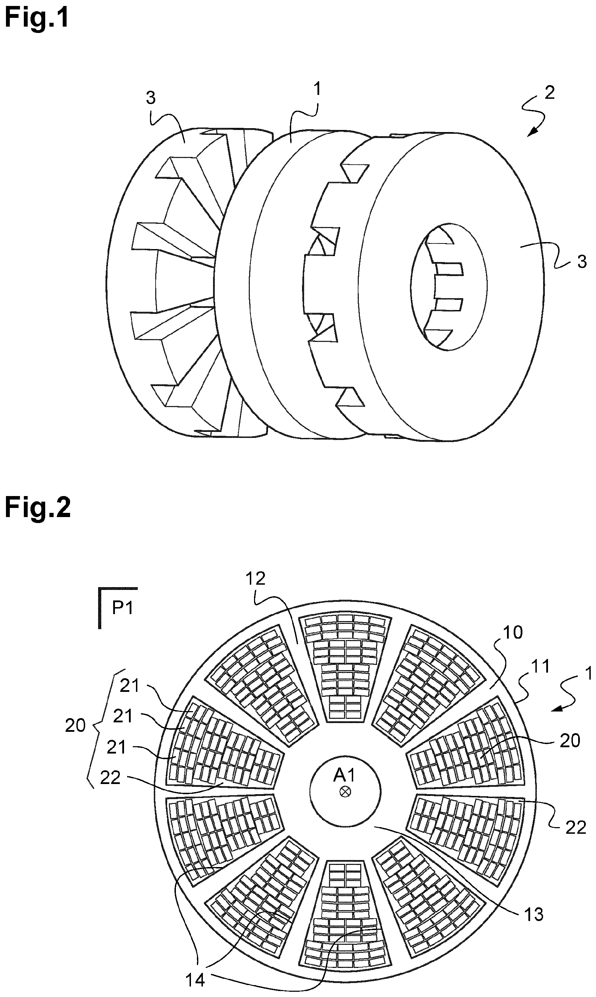

Sur la figure 1, on a représenté une machine électrique à flux axial 2, en l'espèce un moteur permettant de propulser un véhicule électrique.

Une telle machine électrique comporte au moins un rotor et au moins un stator.

Comme le montre la figure 1, cette machine électrique à flux axial 2 comporte ici un rotor 1 situé entre deux stators 3.

Les stators présentent des formes d'anneaux aplatis et sont équipés, sur leurs faces situées du côté du rotor 1, de dents autours desquelles sont enroulées des bobinages de fils électriquement conducteurs. Lorsque ces bobinages sont alimentés en courant électrique, ils permettent de générer un champ magnétique.

Comme le montre la figure 2, le rotor 1, qui fait plus particulièrement l'objet de la présente invention, comprend pour sa part un corps 10 de forme annulaire qui loge une pluralité d'éléments à pôles magnétiques 20 ayant la même fonction que des aimants permanents.

Le champ magnétique généré par les bobinages est alors conçu pour agir sur les éléments à pôles magnétiques 20 de manière à faire tourner le rotor 1.

Le corps 10 a une forme globale de disque, en ce sens qu'il est sensiblement circonscrit à un cylindre de révolution autour d'un axe, ci-après appelé axe de rotation A1. Le corps 10 s'étend dans un plan principal P1 orthogonal à l'axe de rotation. Le plan principal P1 est ici le plan de la figure 2.

Le corps 10 possède ainsi deux faces circulaires et planes, parallèles entre elles et au plan principal P1.

Comme le montre la figure 2, le corps 10 présente un orifice central, de diamètre strictement inférieur à celui des stators 3, qui est adapté à recevoir un arbre de transmission (non représenté) s'étendant le long de l'axe de rotation A1. Le rotor 1 est prévu pour être fixé à cet arbre de transmission qu'il est destiné à entraîner.

Le corps 10 peut par exemple être réalisé à base d'aluminium, d'acier, de fer, de titane ou en un alliage contenant ces métaux, tous amagnétiques. Il est par exemple réalisé par un empilage de tôles de métal. En variant, il pourrait être constitué d'une matière composite chargée en fibres de verre ou de carbone.

Comme cela apparaît en figure 2, le corps 10 délimite une pluralité de logements 14 en creux. Ici, le corps 10 possède dix logements 14 identiques. Les logements 14 sont répartis régulièrement autour de l'axe de rotation A1. Ceci permet d'assurer un bon équilibre du rotor 1 lorsque celui-ci est en rotation.

Chaque logement 14 s'étend de préférence sur toute l'épaisseur du corps 10, de sorte que chaque logement est traversant. Cela présente l'avantage de fournir deux surfaces de travail opposées situées à des distances très proches des stators 3. En variante, on pourrait utiliser des plaques d'extrémité pour optimiser le maintien axial du rotor.

Comme le montre la figure 2, chaque logement 14 présente ici une forme globalement trapézoïdale, avec deux bords latéraux sensiblement droit (et sensiblement radiaux par rapport à l'axe de rotation A1), un bord extérieur sensiblement en forme d'arc-de-cercle centré sur l'axe de rotation A1, et un bord intérieur droit.

En variante, chaque logement 14 pourrait présenter une forme différente.

Compte tenu de la forme de ces logements 14, on peut dire du corps 10 qu'il comporte trois parties, à savoir un moyeu 13 engagé sur l'arbre de transmission du moteur, une frette 11 périphérique, et un ensemble de dix rayons 12 qui connectent le moyeu 13 à la frette 11.

Chaque élément à pôles magnétiques 20 a une forme identique, en négatif, à celle du logement 14 dans lequel il est inséré. Ainsi, chaque élément à pôles magnétiques 20 est ici de forme globalement trapézoïdale.

Tous ces éléments à pôles magnétiques 20 sont identiques si bien que dans la suite de cet exposé, un seul d'entre eux sera décrit.

Cet élément à pôles magnétiques 20 présente donc un bord périphérique qui comporte deux côtés plats (situés dans des plans sensiblement radiaux par rapport à l'axe de rotation A1), un côté extérieur courbé en forme d'arc-de-cercle sensiblement centré sur l'axe de rotation A1, et un côté intérieur plat. En variante, le côté intérieur pourrait être courbé, ce qui serait notamment le cas si e rotor comportait un nombre réduit d'éléments à pôles magnétiques.

Il présente par ailleurs deux faces principales situées dans le prolongement des deux faces du corps 10.

Comme le montre la figure 2, cet élément à pôles magnétiques 20 comprend une pluralité d'aimants permanents de petites tailles (comparées à celle de l'élément 20). Ces petits aimants seront ci-après appelés aimants unitaires 21.

Ici, chaque élément à pôle magnétique 20 comprend au moins une dizaine d'aimants unitaires 21, et de préférence plusieurs dizaines de tel aimants.

De façon avantageuse, chaque aimant unitaire 21 présente une forme de parallélépipède rectangle, de longueur égale à l'épaisseur du corps 10. De façon préférentielle, ces aimants unitaires 21 présentent des formes identiques. Ces aimants unitaires 21 sont donc peu onéreux à fabriquer en série. A titre d'exemple, ils peuvent alors être fabriqués par sectionnement d'un long bloc d'aimant, ce sectionnement étant obtenu par craquement ou sciage.

Il peut s'agir de tout type d'aimant. Il s'agit ici d'aimants frittés au néodyme, communément appelés aimants NdFeB. Ces aimants sont composés d'un alliage de néodyme, de fer et de bore.

En variante, il pourrait s'agir d'aimant en ferrite, par exemple d'aimants SmCo (en Samarium-Cobalt) ou d'aimants AINiCo (composés principalement d'aluminium, de nickel et de cobalt).

Comme cela sera bien décrit ci-après, les aimants unitaires 21 sont répartis en un ou plusieurs groupes de plusieurs aimants unitaires 21.

Pour assurer leur cohésion, c'est-à-dire pour assurer le blocage relatif des aimants unitaires les uns par rapport aux autres (même lorsque la vitesse de rotation du rotor 1 est élevée et est supérieure à 20.000 tours par minutes), l'élément à pôle magnétique 20 comprend une bride 22 qui vient au moins entourer le bord périphérique des aimants unitaires 21.

Dans une variante, cette bride pourra même enrober ces aimants, c'est-à-dire les entourer mais aussi les recouvrir sur les faces parallèles au plan principal P1.

Selon une caractéristique particulièrement avantageuse de l'invention, la bride 22 est réalisée dans un matériau composite comportant un mélange de polymère et de poudre d'aimant.

Ces deux matériaux non miscibles ont des propriétés différentes.

Le polymère a une fonction de liant assurant la fonction précitée de blocage des aimants unitaires 21 les uns par rapport aux autres. Il a également une fonction d'isolation électrique et de minimisation (ou blocage) des courants de Foucault entre les grains de poudre magnétique. La poudre d'aimant a quant à elle pour fonction de maximiser le volume de matériau magnétique dans l'élément à pôles magnétiques 20.

En effet, la forme des aimants unitaires 21 ne permet pas de remplir d'aimants unitaires tout le volume de l'élément à pôles magnétiques 20, si bien que la bride présente en pratique un volume plus important que le volume qui lui serait nécessaire pour assurer sa fonction de blocage précitée.

Le polymère utilisé sera de préférence du type thermodurcissable. En variante, un polymère thermoplastique pourrait également être employé, pour autant qu'il assure bien la fonction de blocage recherché dans tout le domaine de températures auquel le moteur pourra être confronté. Des colles bi-composants, de l'époxy, du nylon, du PPS pourraient également être employés.

La poudre d'aimant est formée de cristaux, par exemple de formes sphériques.

Le type de polymère utilisé, la taille et la forme de ces cristaux et la teneur de cristaux dans le polymère sont les paramètres sur lesquels il est possible de jouer de façon à maximiser le volume de matériau magnétique dans l'élément à pôles magnétiques 20 tout en permettant à la bride 22 d'assurer sa fonction de blocage relatif des aimants unitaires 21.

La teneur de poudre magnétique en volume dans le matériau polymère est de préférence comprise entre 50 et 85 %.

Le diamètre des grains dans la poudre d'aimant est de préférence comprise entre 2 et 100 micromètres (µm). Elle est notamment comprise entre 80 et 100 µm en cas de moulage par injection.

A titre d'exemple, le matériau utilisé pourra être l'un de ceux commercialisés par la société Arnold Magnetic Technologies Corporation. Dans cet exemple, une teneur de 61 à 65% en volume de poudre magnétique est utilisée en cas de moulage par injection. En variante, une méthode de pressage selon un seul axe peut être employé pour fabriquer des aimants collés par compression (on parle de compactage) afin d'obtenir une teneur de 79 % en volume.

Cette société permet d'utiliser une large combinaison de matériaux magnétiques et de polymères, notamment : Ferrite, aimant au néodyme (NdFeB), aimant samarium-cobalt (SmCo), Nylon 6, Nylon 12, le sulfure de polyphénylène (PPS) qui est un matériau thermoplastique semi-cristallin rigide, opaque et ayant un point de fusion élevé.

On peut ainsi utiliser des éléments à pôles magnétiques « pressés et liés en plastique », qui sont le résultat de l'union entre les liants thermoplastiques et les poudres d'aimants permanents

Ici, la bride 22 est entièrement réalisée dans ce matériau. En variante, une partie seulement de cette bride pourrait être réalisée ainsi.

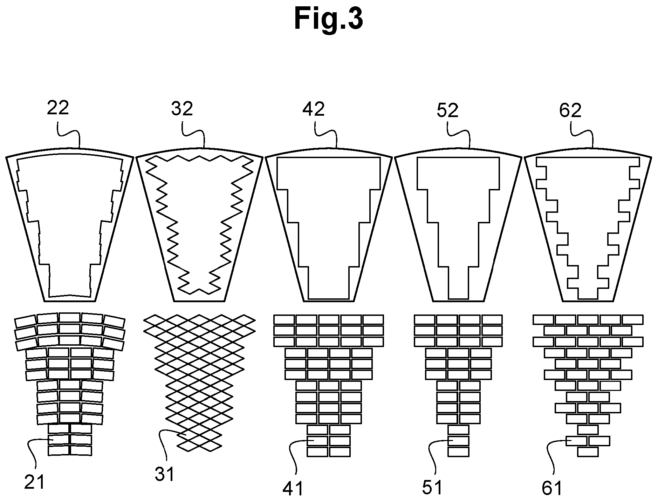

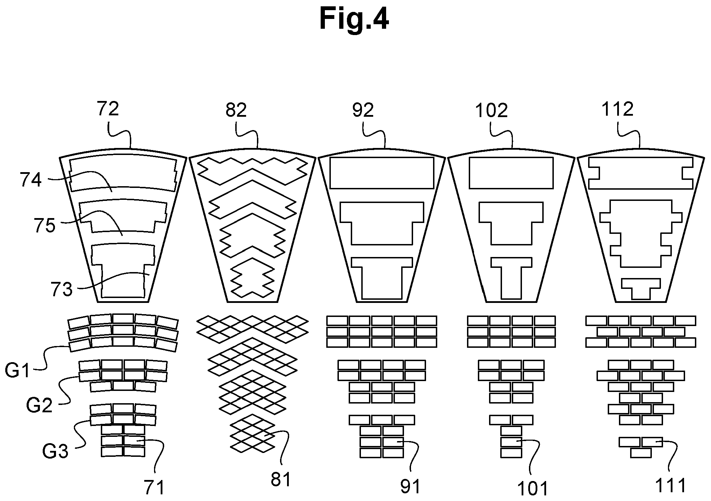

Sur les figures 3 et 4, on a représenté dix configurations utilisables pour fabriquer les éléments à pôles magnétiques 20.

Dans ces dix modes de réalisation, les aimants unitaires sont répartis de telle façon que la distance entre le bord de l'ensemble d'aimants unitaires et le bord périphérique de l'élément à pôles magnétiques 20 n'est pas constante, si bien que l'épaisseur de la bride varie le long de son contour. La bride est en effet prévue pour remplir tout l'espace délimité entre l'ensemble d'aimants unitaires et le logement 14 prévue dans le corps 10.

Sur la figure 3, on a plus précisément représenté cinq modes de réalisation de l'élément à pôles magnétiques 20 distincts, dans lesquels l'ensemble des aimants unitaires 21 de l'élément à pôles magnétiques 20 sont répartis en un seul groupe.

Un groupe d'aimants unitaires 21 est ici défini comme un ensemble de plusieurs aimants unitaires 21 au sein duquel chaque aimant unitaire 21 est en contact d'au moins un autre aimant unitaire 21 par l'intermédiaire d'une fine couche isolante de résine ou de colle.

Sur cette figure 3, les composants représentés sur la ligne du haut correspondent aux cinq modes de réalisation de la bride 22, 32, 42, 52, 62, tandis que les composants représentés sur la ligne du bas illustrent, pour ces cinq modes de réalisation, l'agencement des aimants unitaires 21, 31, 41, 51, 61 utilisés.

Dans le premier mode de réalisation, les aimants unitaires 21 présentent des sections rectangulaires et sont répartis sur plusieurs lignes eu sein desquelles ils sont positionnés côte à côte. Ces lignes sont ici courbes pour suivre la courbure du côté extérieur du bord périphérique de l'élément à pôles magnétiques 20. Il est ici prévu treize lignes contenant de deux à cinq aimants unitaires 21.

L'idée est ici, compte tenu de la largeur et de l'épaisseur des aimants unitaires 21 et du volume de l'élément à pôles magnétiques 20, de maximiser le nombre d'aimants unitaires 21 au sein de chaque ligne et le nombre de lignes.

La disposition des aimants unitaires 21 en lignes courbes permet en outre d'assurer une bonne résistance aux contraintes mécaniques et des bonnes performances magnétiques.

Dans le second mode de réalisation, les aimants unitaires 31 présentent des sections en forme de losange et sont répartis en quinconce, sur plusieurs lignes imbriquées les unes dans les autres. Ces lignes sont ici droites et il est prévu vingt-deux lignes contenant de un à cinq aimants unitaires 21 bloqués ensemble par la bride 32.

En variante, les aimants unitaires pourraient présenter des sections de formes hexagonales.

L'idée, dans ce second mode de réalisation, et de faire en sorte qu'aucun espace libre ne soit laissé entre les aimants unitaires 31, hormis l'espace nécessaire au collage des aimants unitaires 31 entre eux, la colle pouvant elle aussi être un polymère comportant de la poudre d'aimant.

Dans le troisième mode de réalisation, les aimants unitaires 41 présentent des sections rectangulaires et sont répartis sur plusieurs lignes eu sein desquelles ils sont positionnés côte à côte. Ces lignes sont ici droites et il est prévu treize lignes contenant de deux à cinq aimants unitaires 41 bloqués ensemble par la bride 42.

Le quatrième mode de réalisation, se distingue du troisième en ce sens qu'il comporte un aimant unitaire 51 de moins par ligne. Dans ce mode de réalisation, la bride 52 est alors plus épaisse que dans le troisième mode de réalisation, de sorte que le coût de fabrication du rotor 1 s'en trouve restreint.

Dans le cinquième mode de réalisation, les aimants unitaires 61 présentent des sections rectangulaires et sont répartis sur plusieurs lignes eu sein desquelles ils sont positionnés côte à côte. Ces lignes sont ici droites et il est prévu treize lignes contenant de un à cinq aimants unitaires 61 bloqués ensemble par la bride 62.

Dans ce mode de réalisation, et contrairement aux modes de réalisation précités, le nombre d'aimants unitaires par ligne ne varie pas de manière croissante depuis le côté intérieur vers le côté extérieur du bord périphérique de l'élément à pôles magnétiques 20. Au contraire, ici, ce nombre varie de façon alternative, en croissant puis décroissant d'une ligne à l'autre.

Dans ce mode de réalisation (comme dans le second mode), la bride 62 permet ainsi de bien retenir radialement les aimants unitaires 61 situés sur les côtés lorsque le rotor 1 tourne et est soumis à des contraintes centrifuges.

On notera que les quatrième et cinquième modes de réalisation sont plus efficaces que le troisième mode (ils génèrent des vibrations et des bruits plus faibles puisque le stator est soumis à plus de champ magnétique sinusoïdal). Cependant, le troisième mode est probablement le meilleur si on cherche à maximiser le couple ou la puissance sur une courte durée.

Selon une variante, on pourrait combiner de façon asymétrique les premier (ou troisième) modes de réalisation avec le cinquième. Des aimants unitaires selon le premier mode seraient glissés en quinconce de sorte que la structure ressemble presque à celle selon le cinquième mode.

Dans un sixième mode de réalisation non représenté sur les figures, les aimants unitaires sont répartis comme dans le premier mode de réalisation. Toutefois, il est en outre prévu des morceaux d'aimants unitaires (par exemple des débris de craquage ou des aimants de moindres qualités) placés tout autour du groupe d'aimants unitaires, de façon à maximiser le nombre de ces aimants dans l'élément à pôles magnétiques.

Sur la figure 4, on a représenté cinq autres modes de réalisation distincts dans lesquels les aimants unitaires de l'élément à pôles magnétiques 20 sont répartis en plusieurs groupes distincts.

La bride s'étend alors entre les différents groupes, assurant un meilleur blocage des aimants unitaires.

Sur cette figure, les composants représentés sur la ligne du haut correspondent à cinq modes de réalisation de la bride 72, 82, 92, 102, 112, tandis que les composants représentés sur la ligne du bas illustrent, pour ces cinq modes de réalisation, l'agencement des aimants unitaires 71, 81, 91, 101, 111 utilisés.

Dans le septième mode de réalisation et comme dans le premier mode de réalisation, les aimants unitaires 71 présentent des sections rectangulaires et sont répartis sur plusieurs lignes courbes eu sein desquelles ils sont positionnés côte à côte. Ces lignes sont réparties en trois groupes, dont un premier groupe G1 de trois lignes contenant chacune cinq aimants unitaires, un second groupe G2 de trois lignes contenant chacune trois ou quatre aimants unitaires, et un troisième groupe G3 de cinq lignes contenant chacune deux ou trois aimants unitaires.

Dans ce mode de réalisation comme dans tous les modes de réalisation décrits ci-après, la bride 72 est prévue pour remplir l'espace délimité par le logement 14 et les trois groupes G1, G2, G3 d'aimants unitaires 71. Elle comporte ainsi une partie périphérique 73 qui s'étend tout autour des groupes d'aimants unitaires 71, et deux branches 74, 75 qui s'étendent entre les trois groupes d'aimants unitaires 71.

Dans le huitième mode de réalisation comme dans le second mode de réalisation, les aimants unitaires 81 présentent des sections en forme de losange et sont répartis en quinconce. Les groupes d'aimants sont ici au nombre de quatre et sont séparés deux à deux par des espaces en formes de chevrons dont les sommets sont tournés vers l'extérieur. Cet agencement assure une meilleure rigidité à l'ensemble.

Dans les neuvième et dixième modes de réalisation, les aimants unitaires 91, 101 présentent des sections rectangulaires et sont répartis sur plusieurs lignes droites eu sein desquelles ils sont positionnés côte à côte. Ces lignes sont ici réparties en trois groupes de 3 ou 4 lignes.

Dans le onzième mode de réalisation, les aimants unitaires 111 présentent des sections rectangulaires et sont répartis sur plusieurs lignes droites. Dans ce mode de réalisation comme dans le troisième mode, les lignes comportent un nombre d'aimants unitaires 111 qui ne varie pas de façon croissante de l'intérieur vers l'extérieur du rotor, de façon qu'une ligne sur deux environ se trouve enchâssé dans la bride 112. Ces lignes sont ici réparties en trois groupes de deux à cinq lignes.

L'élément à pôles magnétiques 20 pourra être fixé de diverses manières dans son logement 14.

On pourra notamment prévoir, ou non, d'utiliser de la colle.

Dans l'exemple représenté sur la figure 2, les côtés latéraux du bord périphérique de l'élément à pôles magnétiques 20 sont plats de sorte qu'une colle est nécessaire pour assurer cette fixation.

En variante, ces côtés latéraux pourraient ne pas être plats, de façon à ce qu'ils puissent s'emboîter dans une forme correspondante prévue sur le corps 10.

A titre d'exemples, ces côtés latéraux pourraient être équipés de rainures ou de nervures rectilignes, ou pourraient présenter des formes en zig-zag.

On peut décrire maintenant quatre modes de réalisation d'un procédé d'assemblage du rotor 1 représenté sur la figure 2.

Dans un premier mode de réalisation, ce procédé comporte cinq étapes principales.

La première étape consiste à fabriquer le corps 10. Cette étape peut être réalisée de diverses manières, par exemple par découpe d'un feuillard métallique d'épaisseur adaptée ou par découpe d'un matériau composite à base de fibres de verre ou de fibres de carbone.

Cette première étape pourrait en variante être réalisée autrement, par exemple en découpant puis assemblant plusieurs fines feuilles métalliques.

La seconde étape consiste à coller ensemble les aimants unitaires 21 de chaque groupe de chaque élément à pôles magnétiques 20. Cette étape peut être réalisée en utilisant une colle. Cette colle est par exemple un polymère comportant de la poudre d'aimant. En variante, on peut utiliser des bandes adhésives que l'on place entre chaque ligne d'aimants unitaires de façon à les fixer ensemble.

Au cours d'une troisième étape ces groupes d'aimants unitaires 21 assemblés sont placés dans des moules de formes identiques aux formes des logements 14 du corps 10. Ils sont centrés dans ces moules, puis le mélange de polymère et de poudre d'aimant est coulé dans les moules. Le polymère est ensuite polymérisé de façon à ce que chaque élément à pôles magnétiques 20 forme un ensemble monobloc et rigide démoulable.

On notera ici que la première étape pourra être réalisée avant, pendant ou après ces seconde et troisième étapes.

Au cours d'une quatrième étape, les éléments à pôles magnétiques 20 obtenus sont installés dans les logements 14 du corps 10.

Enfin, au cours d'une cinquième étape, le corps 10 et les éléments à pôles magnétiques 20 sont collés ensemble, par exemple en les recouvrant entièrement d'une couche de vernis ou de colle. D'autres types de fixation sont envisageables (emboîtement dans des glissières, etc)
Dans un second mode de réalisation, ce procédé comporte quatre étapes principales.

Les première et deuxième étapes consistent, comme dans le premier mode, à fabriquer le corps 10 et à assembler les aimants unitaires 21 par groupe.

La troisième étape consiste à placer ces groupes d'aimants unitaires 21 directement dans les logements 14 du corps 10, puis à les centrer.

Au cours d'une quatrième étape, le mélange de polymère et de poudre d'aimant est coulé dans les logements 14 et sur le corps 10, de façon à recouvrir l'ensemble du rotor 1. Ce matériau est ensuite polymérisé de façon à ce que cet ensemble soit rigide.

Ainsi, à la différence du premier mode de réalisation, dans ce second mode, les logements 14 servent de moule pour fabriquer les éléments à pôles magnétiques 20.

Dans un troisième mode de réalisation, ce procédé comporte trois étapes principales.

La première étape consiste, comme dans le premier mode, à fabriquer le corps 10.

La seconde étape consiste à placer et agencer les aimants unitaires 21 indépendants dans les logements 14 du corps 10. Ces aimants unitaires sont ici qualifiés d'indépendant en ce sens qu'ils n'ont pas été à ce stade assemblés par groupe.

Au cours d'une troisième étape, le mélange de polymère et de poudre d'aimant est coulé dans les logements et sur le corps, de façon à recouvrir l'ensemble du rotor 1. Ce matériau est ensuite polymérisé de façon à ce que cet ensemble soit rigide.

Dans un quatrième mode de réalisation, ce procédé comporte principalement cinq étapes. Ce quatrième mode de réalisation est envisageable pour les modes de réalisation des éléments à pôles magnétiques dont les aimants unitaires (31) forment des lignes rectilignes entre eux, comme par exemple dans le second mode illustré sur la figure 3 (cette méthode s'applique ainsi aussi aux troisième, quatrième et cinquième modes).

La première étape consiste, comme dans le premier mode, à fabriquer le corps 10.

La seconde étape consiste à créer pour chaque élément à pôles magnétiques, un groupe monobloc d'aimants unitaires par découpe de blocs aimant 120 sur une épaisseur E2 inférieure à l'épaisseur E1 du bloc aimant 120 correspondant au moins à l'épaisseur du rotor, en laissant un socle 121 non découpé tenant les futurs aimants unitaires 31 entre eux. Ces blocs aimants 120 sont de gros aimants, dont la forme est par exemple globalement celle de l'élément à pôles magnétiques à créer. Ils sont sciés par exemple par sciage avec fil diamanté pour obtenir des groupes d'aimants unitaires 31 ayant la configuration souhaitée. L'épaisseur d'un bloc d'aimant dans la direction axiale dans laquelle il sera monté sur le rotor est plus importante que l'épaisseur du rotor afin de garder un socle 121 non découpé du bloc aimant permettant le maintien des aimants unitaires 31 créés dans cette deuxième étape, avant l'injection du matériau thermodurcissable. Si l'épaisseur du bloc aimant le permet, celui-ci est découpé sur une épaisseur E3 égale à plusieurs fois l'épaisseur du rotor afin de pouvoir scier dans la quatrième étape, plusieurs éléments à pôles magnétiques dans le bloc aimant polymérisé à la troisième étape. Il est à noter que dans cette étape les blocs aimants 120 ne sont pas forcément déjà magnétisés, ils peuvent l'être dans une étape ultérieure, notamment après le thermodurcissement du matériau. On nettoie ensuite préférentiellement les poussières issues du sciage.

Au cours d'une troisième étape ces groupes d'aimants unitaires 31 tenus par un socle 121 sont placés dans des moules de formes identiques aux formes des logements 14 du corps 10. Ils sont centrés dans ces moules, le socle 121 étant tenu en dehors du moule, puis le mélange de polymère et de poudre d'aimant est injecté dans les moules, remplissant les interstices entre aimants et créant les brides autour des groupes d'aimants. Le polymère est ensuite polymérisé de façon à ce que chaque groupe d'aimants polymérisé avec ses brides forme un ensemble monobloc et rigide démoulable.

Au cours d'une quatrième étape on découpe le socle 121 des blocs aimants 120 et éventuellement des tranches des blocs aimants pour obtenir les éléments à pôles magnétiques 20.

Au cours d'une cinquième étape on installe chaque élément à pôles magnétiques 20 dans chaque logement 14 du corps 10.

Il est à noter que les éléments à pôles magnétiques ne sont pas forcément collés au corps 10 du rotor, des types d'assemblage sans colle, par exemple par des glissières présente sur les branches du corps 10 de rotor, étant envisageables.

Quel que soit le mode de réalisation utilisé, le rotor 1 une fois assemblé peut ensuite être emmanché sur l'arbre de transmission du moteur, puis être placé dans un carter adapté, entre les deux stators 3.

## Revendications

1. Procédé d'assemblage d'un rotor (1) pour machine électrique à flux axial (2), lequel rotor (1) comprend un corps (10) en forme de disque qui est centré sur un axe de rotation (A1) et qui délimite au moins un logement (14) logeant un élément à pôles magnétiques (20),
ledit élément à pôles magnétiques (20) comprenant un ensemble de plusieurs aimants unitaires (21) et une bride (22) dont une première partie au moins entoure ledit ensemble pour bloquer les aimants unitaires (21) en position, une partie au moins de la bride (22) étant réalisée dans un matériau comportant un mélange de polymère et de poudre d'aimant,
ledit procédé comportant des étapes de :
- fabrication du corps (10),
- création d'au moins un groupe monobloc d'aimants unitaires (31) par découpe d'un bloc aimant (120) sur une épaisseur (E2) correspondant au moins à l'épaisseur du rotor, en laissant un socle (121) non découpé dudit bloc aimant (120) tenant lesdits aimants unitaires (31) entre eux,
- coulage dudit matériau sur les aimants unitaires (31) et polymérisation dudit matériau,
- découpe du socle (121) pour former au moins un élément à pôles magnétiques (20),
- installation de chaque élément à pôles magnétiques (20) dans chaque logement (14) du corps (10).

2. Procédé selon la revendication 1, dans lequel la bride (22) est entièrement réalisée dans ledit matériau.

3. Procédé selon la revendication 1 ou 2, dans lequel le polymère est de type thermodurcissable.

4. Procédé selon l'une des revendications 1 à 3, dans lequel les aimants unitaires (21) dudit ensemble sont répartis en un seul groupe au sein duquel chaque aimant unitaire (21) est en contact d'au moins un autre aimant unitaire (21) par l'intermédiaire d'une couche de colle ou de résine.

5. Procédé selon l'une des revendications 1 à 3, dans lequel les aimants unitaires (21) dudit ensemble sont répartis en au moins deux groupes (G1, G2, G3) distincts au sein desquels chaque aimant unitaire (21) est en contact d'au moins autre aimant unitaire (21) par l'intermédiaire d'une fine couche de colle ou de résine et dans lequel la bride (72) comporte une seconde partie (74) qui s'étend entre lesdits deux groupes (G1, G2, G3).

## Patentansprüche

1. Verfahren zur Montage eines Rotors (1) für eine Axialstrom-Elektromaschine (2), wobei der Rotor (1) einen scheibenförmigen Körper (10) umfasst, der auf einer Drehachse (A1) zentriert ist und mindestens ein Gehäuse (14) begrenzt, das ein Magnetpolelement (20) aufnimmt,
das Magnetpolelement (20), das eine Baugruppe von mehreren Einheitsmagneten (21) und einen Flansch (22) umfasst, von denen mindestens ein erster Teil die Baugruppe umgibt, um die Einheitsmagnete (21) in Position zu arretieren, wobei mindestens ein Teil des Flanschs (22) aus einem Material mit einer Mischung aus Polymer **und** Magnetpulver besteht,
das Verfahren umfasst folgende Schritte:
- Herstellen des Körpers (10),
- Erstellen von mindestens einer Monoblock-Gruppe von Einheitsmagneten (31) durch Zuschneiden eines Magnetblocks (120) auf eine Dicke (E2), die mindestens der Dicke des Rotors entspricht, wobei ein ungeschnittener Sockel (121) des besagten Magnetblocks (120) belassen wird, der die Einheitsmagnete (31) zwischen sich hält,
- Gießen des Materials auf die Einheitsmagnete (31) und Polymerisation des Materials,
- Ausschneiden des Sockels (121), um mindestens ein magnetpolförmiges Element (20) zu bilden,
- Einbauen jedes Magnetpolelements (20) in jedes Gehäuse (14) des Körpers (10).

2. Verfahren nach Anspruch 1, wobei der Flansch (22) vollständig aus dem Material gefertigt ist.

3. Verfahren nach Anspruch 1 oder 2, wobei das Polymer duroplastisch ist.

4. Verfahren nach einem der Ansprüche 1 bis 3, wobei die Einheitsmagnete (21) der Baugruppe in eine einzige Gruppe aufgeteilt sind, in der jeder Einheitsmagnet (21) über eine Klebstoff- oder Harzschicht mit wenigstens einem anderen Einheitsmagneten (21) **in** Kontakt steht.

5. Verfahren nach einem der Ansprüche 1 bis 3, wobei die Einheitsmagnete (21) der Baugruppe in mindestens zwei getrennte Gruppen (G1, G2, G3) aufgeteilt sind, innerhalb derer jeder Einheitsmagnet (21) **über eine dünne Klebstoff- oder Harzschicht** mit mindestens einem anderen Einheitsmagneten (21) in Kontakt steht und wobei der Flansch (72) einen zweiten Teil (74) aufweist, der sich zwischen den beiden Gruppen (G1, G2, G3) erstreckt.

## Claims

1. Method for assembling a rotor (1) of an axial flux electric machine (2), wherein said rotor comprises a disc-shaped body (10) that is centered about a rotation axis (A1) and which delimits at least one housing (14) housing a magnetic pole element (20),
said element with magnetic poles (20) comprises an assembly of several individual magnets (21) and a flange (22), a first part of which at least surrounds said assembly to immobilise the individual magnets (21) in position, at least one part of the flange (22) being made of a material comprising a mixture of polymer and magnet powder,
said method comprising steps of:
- manufacturing the body (10),
- creating at least one one-piece individual magnet group (31) by cutting a magnet block (120) over a thickness (E2) corresponding at least to the thickness of the rotor, by leaving a base (121) uncut of said magnet block (120) holding said individual magnets (31) together,
- casting said material on the individual magnets (31) and polymerising said material,
- cutting of the base (121) to form at least one element with magnetic poles (20),
- installing each element with magnetic poles (20) in each housing (14) of the body (10).

2. Method according to claim 1, wherein the flange (22) is fully made of said material.

3. Method according to claim 1 or 2, wherein the polymer is of the thermosetting type.

4. Method according to one of claims 1 to 3, wherein the individual magnets (21) of said assembly are distributed in one single group within which each individual magnet (21) is in contact with at least one other individual magnet (21) by way of a glue or resin layer.

5. Method according to one of claims 1 to 3, wherein the individual magnets (21) of said assembly are distributed in at least two distinct groups (G1, G2, G3) within which each individual magnet (21) is in contact with at least one other individual magnet (21) by way of a thin glue or resin layer and wherein the flange (72) comprises a second part (74) which extends between said two groups (G1, G2, G3).
